# EUROPÄISCHE PATENTSCHRIFT

(11) **EP 1 189 987 B1**
(45) Veröffentlichungstag und Bekanntmachung des Hinweises auf die Patenterteilung: **02.01.2003**
(21) Anmeldenummer: 00954414.9
(22) Anmeldetag: 02.06.2000
(51) Int. Cl.: C08L 33/12, C08L 51/00

(54) **SCHLAGZÄHMODIFIZIERTE POLYMETHACRYLAT-FORMMASSE MIT VERBESSERTER FLIESSFÄHIGKEIT**
MODIFIED IMPACT RESISTANT POLYMETHACRYLATE MOULDING MATERIAL WITH IMPROVED FLOWABILITY
MATIERE MOULABLE A BASE DE POLYMETHACRYLATE A RESISTANCE AUX CHOCS MODIFIEE ET A FLUIDITE AMELIOREE

(30) Priorität: 17.06.1999 DE 19927769
(43) Veröffentlichungstag der Anmeldung: 27.03.2002
(73) Patentinhaber: Röhm GmbH & Co. KG, 64293 Darmstadt (DE)
(72) Erfinder: HÖSS, Werner, D-63150 Heusenstamm (DE); ALBRECHT, Klaus, D-55129 Mainz (DE)
(86) Internationale Anmeldenummer: EP0005051
(87) Internationale Veröffentlichungsnummer: WO00078863

(56) Entgegenhaltungen:
- DATABASE WPI Section Ch, Week 199909 Derwent Publications Ltd., London, GB; Class A14, AN 1999-101209 XP002153902 & JP 10 330576 A (KURARAY CO LTD), 15. Dezember 1998 (1998-12-15)
- DATABASE WPI Section Ch, Week 198430 Derwent Publications Ltd., London, GB; Class A14, AN 1984-184826 XP002153903 & JP 59 102947 A (MITSUBISHI RAYON CO LTD) , 14. Juni 1984 (1984-06-14)
- AN 99-114893: PLASDOC - CENTRAL PATENTS INDEX - BASIC ABSTRACTS JOURNAL, SECTION A., XP002153901 DERWENT PUBLICATIONS LTD. LONDON., GB & JP 10 338792 A (KURARAY CO LTD) 22. Dezember 1998 (1998-12-22)

## Beschreibung

Die Erfindung betrifft schlagzähmodifizierte Polymethacrylat-Formmassen mit verbesserter Fließfähigkeit.

### Stand der Technik

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

EP-A 469 521 beschäftigt sich mit der Fließverbesserung bei der Verarbeitung von schlagzäh zu modifizierenden PVC-Blends, z. B. beim Spritzgießen.
Dabei werden zu PVC-ABS-Polymermischungen Polymere auf Alkylmethacrylat-Basis zugegeben, die zu mindestens 50 Gew.-% aus Methylmethacrylat sowie zu 2 - 50 Gew.-% aus C₂-C₈-Alkylmethacrylaten bestehen und Molekulargewichte (Mw) in g/mol im Bereich von 2 000 bis 20.000 aufweisen.

### Aufgabe und Lösung

Es wurde als Aufgabe gesehen eine schlagzähmodifizierte Polymethacrylat-Formmassen mit verbesserter Fließfähigkeit bei hohen Temperaturen, wie sie im Spritzgußverfahren angewendet werden, bereitzustellen, die zugleich eine hohe Wärmeformbeständigkeit und hohe Kerbschlagzähigkeit aufweist.

Die Aufgabe wird gelöst durch eine
schlagzähmodifizierte Polymethacrylat-Formmasse, charakterisiert durch
eine Vicat-Erweichungstemperatur nach ISO 306 (B 50) von mindestens 90 °C
eine Kerbschlagzähigkeit KSZ (Charpy) nach ISO 179/1eA von mindestens 3,0 KJ/m² bei 23 °C, und
eine Fließfähigkeit MVR (230 °C/3,8 kg) nach ISO 1133 von mindestens 11 cm³/10 min
erhältlich durch Mischen von
a ) 80 bis 98 Gew.-% einer schlagzäh modifizierten Polymethacrylat-Formmasse mit
b) 20 bis 2 Gew.-% einer niedermolekularen Polymethacrylat-Formmasse
in der Schmelze, wobei die schlagzähe Formmasse zu 70 bis 99 Gew.-% aus einer Matrix aus 80 bis 100 Gew.-% radikalisch polymerisierten
Methylmethacrylat-Einheiten und gegebenenfalls 0 bis 20 Gew.-% weiteren radikalisch polymerisierbaren Comonomeren besteht und 1 bis 30 Gew.-% eines Schlagzähmodifizierungsmittels enthält,
und die niedermolekulare Polymethacrylat-Formmasse zu 80 bis 100 Gew.-% aus radikalisch polymerisierten Methylmethacrylat-Einheiten und zu 0 bis 20 Gew.-% aus weiteren radikalisch polymerisierbarer Comonomeren besteht und eine Viskositätszahl (η_{sp/c}) gemessen in Chloroform nach ISO 1628 Teil 6 von 25 bis 35 ml/g aufweist.

Es war nicht vorhersehbar, daß die gewünschten Eigenschaften durch den Zusatz einer niedermolekularen Polymethacrylat-Formmasse erreicht werden konnten. Die neue schlagzähmodifizierte Formmasse eignet sich insbesondere für den Einsatz im Spritzgußverfahren, wo eine gute Fließfähigkeit gefordert wird, um kurze Taktzeiten und gute Formfüllungen zu gewährleisten. Die erhaltenen Spritzguß-Formkörper sind dabei nicht in ihren übrigen Eigenschaften, insbesondere der Wärmeformbeständigkeit und Kerbschlagzähigkeit beeinträchtigt.

Ausführung der Erfindung

### Polymethacrylat-Matrix

Die schlagzähe Formmasse besteht zu 70 - 99 Gew.-% aus einer Matrix, die zu 80 bis 100, vorzugsweise zu 90 - 98 Gew.-%, aus radikalisch polymerisierten Methylmethacrylat-Einheiten und gegebenenfalls zu 0 - 20, bevorzugt zu 2 - 10 Gew.-% aus weiteren radikalisch polymerisierbarern Comonomeren, z. B. C1-bis C4-Alkyl(meth)acrylaten, insbesondere Methylacrylat, Ethylacrylat oder Butylmethacrylat. Vorzugsweise liegt das mittlere Molekulargewicht Mw der Matrix im Bereich von 90.000 g/mol bis 200.000 g/mol, insbesondere 100.000 g/mol bis 150.000 g/mol.

### Schlagzähmodifizierungsmittel

In der Polymethacrylat-Matrix sind 1 bis 30, bevorzugt 2 bis 20, besonders bevorzugt 3 bis 15, insbesondere 5 bis 12 Gew.-% eines Schlagzähmodifizierungsmittels, das eine Elastomerphase aus vernetzten Polymerisatteilchen ist, enthalten. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 50 bis 500 µm, bevorzugt 80 bis 120 µm. Diese bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vemetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Stryrol.

Bevorzugte Schlagzähmodifizierungsmittel sind Polymerisatteilchen, die einen zwei-, besonders bevorzugt einen dreischichtigen Kern-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen dieser Emulsionspolymerisate liegen im Bereich von 100 - 500 nm, bevorzugt 200 - 400 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-%, besonders bevorzugt im Bereich von 25 bis 35 Gew.-%.

### Schlagzähmodifizierte Polymethacrylat-Formmassen

Im Extruder können das Schlagzähmodifizierungsmittel und Matrix-Polymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten oder Spritzgußteilen weiterverarbeitet werden.

### Kerbschlagzähigkeiten und Fließfähigkeit des Standes der Technik

Formkörper aus handelsüblichen schlagzähmodifizierte Polymethacrylat-Formmassen weisen Kerbschlagzähigkeiten KSZ nach Charpy gemäß ISO 179/1eA im Bereich von 3,0 KJ/m² bis 5,0 KJ/m² auf.

Handelsübliche schlagzähmodifizierte Polymethacrylat-Formmassen weisen Fließfähigkeiten MVR (230 °C/3,8 kg) im Bereich von 0,4 bis 8,1 cm³/10 min nach ISO 1133 auf. Die Fließfähigkeit schlagzähmodifizierter Polymethacrylat-Formmassen soll insbesondere für die Spritzgießverarbeitung möglichst hoch sein. Auf Fließfähigkeit optimierte, schlagzähmodifizierte Polymethacrylat-Formmassen erreichen MVR-Werte (230 °C/3,8 kg, ISO 1133) im Bereich von maximal ca. 10,0 cm³/10min.

### Niedermolekulare Polymethacrylat-Formmasse

Die Erhöhung der Fließfähigkeit der schlagzähmodifizierten Polymethacrylat-Formmassen unter Beibehaltung der Kerbschlagzähigkeit erfolgt durch die Zugabe einer niedermolekularen Polymethacrylat-Formmasse.

Der Anteil der niedermolekularen Polymethacrylat-Formmasse an der schlagzähmodifizierten Polymethacrylat-Formmasse liegt zwischen 2 und 20, bevorzugt zwischen 3 und15 Gew.-%.

Die niedermolekulare Polymethacrylat-Formmasse besteht zu 80 bis 100 Gew.-% aus radikalisch polymerisierten Methylmethacrylat-Einheiten und zu 0 - 20 Gew.-% weiteren radikalisch polymerisierbaren Comonomeren, z. B. C₁- bis C₄-Alkyl(metha)crylaten, insbesondere Methylacrylat, Ethylacrylat oder Butylmethacrylat. Die niedermolekulare Polymethacrylat-Formmasse weist eine Viskositätszahl (η_{sp/c}) gemessen in Chloroform nach ISO 1628 Teil 6 im Bereich von 25 bis 35 ml/g, bevorzugt 27 - 33 ml/g auf, entsprechend einem mittleren Molekulargewicht Mw (Gewichtsmittel) von 30.000 bis 70.000, insbesondere 40.000 bis 60.000.

Das Molekulargewicht kann z. B. nach der Differential-Scanning-Chromatographie Methode (DSC) oder durch Gelchromatographie anhand von Polymethylmethacrylat-Eichstandards bzw. Eichgeraden, die mit der Viskositätszahl korrelieren, bestimmt werden.

### Zugabe/Verwendung der niedermolekulare Polymethacrylat-Formmasse

Die niedermolekulare Polymethacrylat-Formmasse kann als Granulat bei der Schmelzeverarbeitung von Schlagzähmodifizierungsmittel und
Polymethacrylat-Matrix im Extruder zugegeben werden. Die niedermolekulare Polymethacrylat-Formmasse wird auf diese Weise in der Schmelze eingearbeitet bzw. eingemischt und ist dann Bestandteil der aus dem Extruder ausgetragenen schlagzähmodifizierten Formmasse. Diese kann entweder unmittelbar zu Formkörpern durch Extrusion oder Spritzguß verarbeitet werden oder zunächst durch Zerkleinern in ein verkaufsfähiges Granulat überführt werden.

Die niedermolekulare Polymethacrylat-Formmasse kann auch als Granulat mit einem Granulat bestehend aus bereits in der Schmelze vermischtem Schlagzähmodifizierungsmittel und Polymethacrylat-Matrix gemischt werden (Granulatgemisch) und anschließend in der Schmelze verarbeitet werden.

### Eigenschaften der neuen Polymethacrylat-Formmasse

Die durch Mischen der niedermolekularen Polymethacrylat-Formmasse und der schlagzähmodifizierten Polymethacrylat-Formmasse in der Schmelze erhaltene Polymethacrylat-Formmasse ist charakterisiert durch eine Vicat-Erweichungstemperatur nach ISO 306 (B 50) von mindestens 90 °C, eine Kerbschlagzähigkeit KSZ (Charpy) nach ISO 179/1eA von mindestens 3,0 KJ/m² bei 23 °C und eine Fließfähigkeit MVR (230 °C/3,8 kg) nach ISO 1133 von mindestens 11 cm³/10 min.

### BEISPIELE

Eine schlagzähmodifizierte Formmasse mit einem Gehalt von 7,5 Gew.-% Schlagzähmodifizierungsmitte (Basis Emulsionspolymerisat) wurde mit 5 und 10 Gew.-% einer niedermolekularen Formmasse in einem Doppelschneckenextruder (ZSK 25 von W&P) bei 220 °C in der Schmelze homogen gemischt. Die aus den Extruder abgezogenen Stränge wurden abgekühlt und zu Granulat geschnitten. Aus dem erhaltenen Granulat wurden Probekörper auf einer Spritzgießmaschine hergestellt. An den erhaltenen Probekörpern wurden verschiedene Eigenschaften gemessen.

### Schlagzähmodifizierte Formmasse:

bestehend aus 92,5 Gew.-% Matrix Polymerisat und 7,5 Gew.-% Schlagzähmodifizierungsmittel
Matrix Polymerisat:
91 Gew.-% Methylmethacrylat und 9 Gew.-% Methylacrylat
Schlagzähmodifizierungsmittel:
Ein handelsübliches dreiphasiges (Kern und zwei Schalen)
Emulsionspolymerisat mit einer Teilchengröße im Bereich von 300 - 500 nm und einem Kern/Schale1/Schale 2-Verhältnis von 1 : 1 : 1 mit einem Butylacrylatanteil von 27 Gew.-% bezogen auf das Schlagzähmodifizierungsmittel.
Kern:
95,5 Gew.-% Methylmethacrylat, 4 Gew.-% Ethylacrylat und 0,5 Gew.-% 0,5 Gew.-% Allylmethacrylat.
Schale 1:
81,2 Gew.-% Butylacrylat, 17,5 Gew.-% Styrol, 1,3 Gew.-% Allylmethacrylat
Schale 2:
96 Gew.-% Methylmethacrylat, 4 Gew.-% Ethylacrylat

### Niedermolekulare Formmasse (NF):

bestehend aus 85 Gew.-% Methylmethacrylat- und 15 Gew.-% Methylacrylat-Einheiten mit einer Viskositätszahl (n sp/c) gemessen in Chloroform nach ISO 1628 Teil 6 im Bereich von 30 ml/g, entsprechend einem Mw von ca. 50 000 g/mol

Die Ergebnisse sind in der folgenden Tabelle zusammengefaßt. Der Zusatz von 5 oder 10 Gew.-% der niedermolekularen Formmasse (NF) führt zu einer deutlichen Erhöhung der Fließfähigkeit MVR, während die Wärmeformbeständigkeit (VST) und die Kerbschlagzähigkeit (KSZ) gegenüber dem Beispiel ohne NF-Zusatz praktisch unverändert bleiben.

| Anteil NF | | | | |
|---|---|---|---|---|
| | Norm | 0 Gew.-% | 5 Gew.-% | 10 Gew.-% |
| MVR (230°C/3,8kg) in cm³/10 min | ISO 1133 | 8,9 | 11,1 | 13,0 |
| VST (B 50) in°C | ISO 306 | 94,6 | 94,8 | 94,2 |
| KSZ (Charpy /23 °C) in KJ/m² | ISO 179/1eA | 3,4 | 3,4 | 3,4 |

## Patentansprüche

1. Schlagzähmodifizierte Polymethacrylat-Formmasse, charakterisiert durch
eine Vicat-Erweichungstemperatur nach ISO 306 (B 50) von mindestens 90 °C
eine Kerbschlagzähigkeit KSZ (Charpy) nach ISO 179/1eA von mindestens 3,0 KJ/m² bei 23 °C, und
eine Fließfähigkeit MVR (230 °C/3,8 kg) nach ISO 1133 von mindestens 11 cm³/10 min, erhältlich durch Mischen von
a ) 80 bis 98 Gew.-% einer schlagzäh modifizierten Polymethacrylat-Formmasse mit
b) 20 bis 2 Gew.-% einer niedermolekularen Polymethacrylat-Formmasse
in der Schmelze, wobei die schlagzähe Formmasse zu 70 bis 99 Gew.-% aus einer Matrix aus 80 bis 100 Gew.-% radikalisch polymerisierten
Methylmethacrylat-Einheiten und gegebenenfalls 0 bis 20 Gew.-% weiteren radikalisch polymerisierbaren Comonomeren besteht und 1 bis 30 Gew.-% eines Schlagzähmodifizierungsmittels enthält,
und die niedermolekulare Polymethacrylat-Formmasse zu 80 bis 100 Gew.-% aus radikalisch polymerisierten Methylmethacrylat-Einheiten und zu 0 bis 20 Gew.-% aus weitereren radikalisch polymerisierbaren Comonomeren besteht und eine Viskositätszahl (η_{sp/c}) gemessen in Chloroform nach ISO 1628 Teil 6 von 25 bis 35 ml/g aufweist.

2. Formmasse nach Anspruch 1, **dadurch gekennzeichnet, daß** das Matrix-Polymerisat ein Molekulargewicht Mw von 90.000 g/mol bis 200.000 g/mol aufweist

3. Formmasse nach Anspruch 1, **dadurch gekennzeichnet, daß** ein Schlagzähmodifizierungsmittel mit einem Polybutylacrylat-Anteil von 20 - 40 Gew.-% enthalten ist.

4. Verwendung einer Formmasse nach einem oder mehreren der Ansprüche 1 bis 3 zur Herstellung von Formkörpern im Spritzgußverfahren.

5. Verwendung nach Anspruch 4, wobei die niedermolekulare Polymethacrylat-Formmasse zusammen mit der schlagzäh modifizierten Polymethacrylat-Formmasse als Granulatgemisch eingesetzt wird.

## Claims

1. Impact-modified polymethacrylate moulding composition, **characterised by**
a Vicat softening temperature according to ISO 306 (B 50) of at least 90°C
a Charpy notching strength KSZ according to ISO 179/1eA of at least 3.0 KJ/m² at 23°C,
and
a flow rate MVR (230°C/3.8 kg) according to ISO 1133 of at least 11 cm³/10 min which may be obtained by mixing
a) 80 to 98 wt.% of an impact-modified polymethacrylate moulding composition with
b) 20 to 2 wt.% of a low-molecular polymethacrylate moulding composition
in a melt, wherein the impact-resistant moulding composition consists of 70 to 99 wt.% of a matrix of 80 to 100 wt.% of radically polymerised methyl methacrylate units and optionally 0 to 20 wt.% of other radically polymerisable comonomers and 1 to 30 wt.% of an impact strength modifier,
and the low-molecular polymethacrylate moulding composition consists of 80 to 100 wt.% of radically polymerised methyl methacrylate units and 0 to 20 wt.% of other radically polymerisable comonomers and has a viscosity number (η_{sp/c}) measured in chloroform according to ISO 1628 Part 6 of 25 to 35 ml/g.

2. Moulding composition according to claim 1,
**characterised in that** the matrix polymer has a molecular weight Mw of 90,000 g/mol to 200,000 g/mol.

3. Moulding composition according to claim 1, **characterised in that** it contains an impact strength modifier with a polybutyl acrylate content of 20 - 40 wt.%.

4. Use of a moulding composition according to one or more of claims 1 to 3 for producing mouldings by the injection moulding method.

5. Use according to claim 4, wherein the low molecular polymethacrylate moulding composition is used together with the impact-modified polymethacrylate moulding composition as a mixture of granules.

## Revendications

1. Matière moulable à base de polyméthacrylate à résistance aux chocs modifiée,
**caractérisée par**
- une température de ramollissement Vicat selon ISO 306 (B 50) d'au moins 90°C
- une résistance aux chocs d'entaille KSZ (Charpy) selon ISO 179/ 1eA d'au moins 3,0 KJ/m² à 23°C, et
- une fluidité MVR (230°C/3,8 kg) selon ISO 1133 d'au moins 11 cm³/10 mn,
que l'on peut obtenir en mélangeant
a) de 80 à 98 % en poids d'une matière moulable à base de polyméthacrylate à résistance aux chocs modifiée avec
b) de 20 à 2 % en poids d'une matière moulable à base de polyméthacrylate à faible poids moléculaire
dans la masse fondue, la matière moulable résiliente étant constituée
- de 70 à 99 % en poids d'une matrice elle-même constituée de 80 à 100 % en poids d'unités méthacrylate de méthyle polymérisées par voie radicalaire et le cas échéant de 0 à 20 % en poids d'autres comonomères polymérisables par voie radicalaire, et
- de 1 à 30 % en poids d'un modificateur de résistance aux chocs, et la matière moulable à base de polyméthacrylate à faible poids moléculaire étant constituée de 80 à 100 % en poids d'unités méthacrylate de méthyle polymérisées par voie radicalaire et de 0 à 20 % en poids d'autres comonomères polymérisables par voie radicalaire, et présentant un indice de viscosité (η_{sp/c}) mesuré dans le chloroforme selon ISO 1628, 6^{ème} partie, de 25 à 35 ml/g.

2. Matière moulable selon la revendication 1,
**caractérisée en ce que**
le polymère de la matrice présente un poids moléculaire Mw de 90.000 g/mol à 200 000 g/mol.

3. Matière moulable selon la revendication 1,
**caractérisée en ce qu'**
elle contient un modificateur de résistance aux chocs avec une proportion de polyacrylate de butyle de 20 à 40 % en poids.

4. Utilisation d'une matière moulable selon une ou plusieurs des revendications 1 à 3, pour la production d'articles moulés dans un procédé de moulage par pulvérisation.

5. Utilisation selon la revendication 4, dans laquelle on utilise la matière moulable à base de polyméthacrylate à faible poids moléculaire avec la masse à mouler à base de polyméthacrylate à résistance aux chocs modifiée sous forme de mélange de granulés.
